# EUROPEAN PATENT SPECIFICATION

(11) **EP 2 025 077 B1**
(45) Date of publication and mention of the grant of the patent: **20.07.2011**
(21) Application number: 07798007.6
(22) Date of filing: 01.06.2007
(51) Int. Cl.: H04B 10/00

(54) **DISPERSION AND NONLINEAR COMPENSATOR FOR OPTICAL DELIVERY FIBER**
DISPERSION UND NICHT LINEARER KOMPENSATOR FÜR EINEN LICHTWELLENLEITER
COMPENSATEUR DE DISPERSION ET DE NON-LINÉARITÉ POUR FIBRE OPTIQUE D'AMENÉE

(30) Priority: 02.06.2006 US 810440 P
(43) Date of publication of application: 18.02.2009
(73) Proprietor: Picometrix, LLC, Ann Arbor, MI 48104 (US)
(72) Inventor: FICHTER, Greg, Ann Arbor, MI 48105 (US); SUCHA, Gregg, Manchester, MI 48158 (US); ZIMDARS, David, Ann Arbor, MI 48108 (US); WILLIAMSON, Steven, Ann Arbor, MI 48105 (US)
(74) Representative: Solf, Alexander
(86) International application number: PCT/US2007/070211
(87) International publication number: WO 2007/143542

(56) References cited:
- GB-A- 2 352 512
- US-A- 5 056 111
- US-A- 5 499 134
- US-A1- 2004 234 270
- US-A1- 2005 013 538
- US-A1- 2005 220 432
- US-A1- 2005 238 070
- US-B1- 6 320 191
- US-B1- 6 320 191
- US-B1- 6 816 647

## Description

### CROSS REFERENCE TO RELATED APPLICATION

This application claims the benefit of U.S. provisional application entitled DISPERSION AND NONLINEAR COMPENSATOR FOR OPTICAL DELIVERY FIBER, application number 60/810,440 filed on June 2, 2006, the entirety of which is hereby incorporated by reference.

### BACKGROUND OF THE INVENTION

### 1. Field of the Invention

The present invention relates to a system to control the duration of pulses delivered through an optical fiber.

### 2. Description of the Known Technology

Extremely short optical pulses in the femtosecond range generated by an optical source are transferred to a terahertz generator by way of an optical fiber cable. A terahertz transmitter is comprised of a material that, when illuminated with a short optical pulse, generates electromagnetic radiation in the terahertz range (10 GHz to 50 THz). These materials fall principally into two large categories: photoconductive terahertz generators, and non-linear optical generators. In the former category, the incident photons generate electrical carriers, both holes and electrons, which are then accelerated by a voltage potential within the material that is either externally applied, or internally present due surface potentials in semiconductors, or caused by the differing mobilities of holes and electrons, referred to as the Dember effect. This charge motion in turn generates an electromagnetic field that normally consists of a single or half-cycle of radiation in the terahertz range. The second category of terahertz generators consists of materials that utilize non-linear optical methods to generate terahertz radiation. These materials have a non-linear susceptibility, χ⁽²⁾, χ⁽³⁾, or χ⁽⁴⁾ that causes the input optical pulse to generate a polarization state described by the equation: *P_{NL}* = χ⁽ⁱ⁾(*E*)*ⁱ*. Where *P_{NL}* is the non-linear polarization state of the material, and E is the electrical field of the incident optical pulse.

Typically, the second-order nonlinearity, χ⁽²⁾, is used, making the induced polarization amplitude proportional to the square of the laser pulse's electric field amplitude. This method is known by a number of names to describe the various physical processes taking place. Some of the effects known to occur are the inverse Franz-Keldysh effect, electric-field-induced optical rectification, the Stark effect, and Cherenkov radiation. These effects will heretofore be referred to collectively as optical rectification since the scientific literature generally accepts this term to encompass all of the effects.

In order to successfully deliver high contrast, sub 100 femtosecond pulses from a laser to the optical generator using an optical fiber, the dispersion of the optical fiber must be compensated. Dispersion is the lengthening in duration of a light pulse, as it travels the length of an optical fiber, due to different wavelengths or colors of light traveling at different velocities through the fiber. This phenomenon results from the frequency dependence of the refractive index of silica used in optical fibers and the geometry of the fiber.

The physical origin of the index of refraction and its consequent frequency-dependent nature are resonances in the material structure. Most optical materials have a strong resonant absorption in the ultraviolet portion of the spectrum and another in the mid infrared that leads to group velocity dispersion ("GVD") being positive in the ultraviolet and visible portion of the spectrum and negative in the near-infrared portion of the spectrum. GVD is related to the second derivative of the index of refraction with respect to wavelength. Positive GVD is the condition where longer wavelength light packets will travel faster through the optical fiber than shorter wavelength light packets. Negative GVD is the opposite condition, shorter wavelength light packets will travel faster through the optical fiber than longer wavelength light packets.

In addition to dispersion compensation, at higher optical powers the self phase modulation in the fiber must be controlled. Self phase modulation ("SPM") is an effect caused by the increase of refractive index with light intensity in optical fiber and other materials. When the fiber is conveying an optical pulse, the SPM depends on the pulse energy and temporal profile. Generally, but not always, the effect of SPM is to increase the bandwidth of the pulse. SPM complicates the problem of dispersion compensation. In the presence of SPM, dispersion management is no longer a simple linear phenomenon, but becomes nonlinear, and the pulse intensity and shape at each point in the system must be taken into consideration. This is especially true in the case where a fiber delivery system has its dispersion compensation before the delivery fiber, as described by J. V. Rudd in U.S. Patent 6,320,191. Therefore, it is usually preferable to minimize the effects of SPM in the system. In this case, SPM actually decreases the optical bandwidth, thus limiting the minimum pulse duration at the end of the delivery fiber. This effect becomes more pronounced as the optical power is increased, and it presents practical limits on how much optical power can be delivered through the fiber. Typically, for a single mode fiber, this effect limits the delivered optical power to a few milliwatts (at 80 MHz repetition rate) before the bandwidth starts to degrade noticeably. Alternatively, it is possible to utilize the spectral broadening effects of SPM to advantage, as it makes overall pulse compression possible; i.e., it is possible to obtain output pulses shorter than the input pulses if the dispersion is properly adjusted to optimally compress the additional bandwidth due to SPM.

Furthermore, polarization sensitivity is a characteristic of photoconductive antennas that must be accounted for and corrected for optimal performance. The responsivity and the DC photocurrent of a photoconductive antenna (for either transmitter or receiver) depend on the polarization of the incident laser pulse, and can have a polarization contrast ratio of up to 30%. The polarization delivered by the optical fiber depends on the polarization of the laser source and the fiber birefringence. Fibers with lower birefringence have more rapid mixing of polarization states, unless polarization control is included to make sure the light is conveyed along the slow axis. Fibers with higher birefringence cause less polarization mixing, but unless polarization is controlled, pulse energy traveling in the fast and slow axis arrives at the terahertz transmitter at different times. Polarization control methods include use of keys on connectors, use of rotating waveplates at fiber terminations, and use of active or manual methods to generate stress birefringence.

The choice of ultrashort pulse laser ("USPL") source has a substantial bearing on the system size and weight. Ti:sapphire lasers, while commonly used for THz generation & detection, are large, heavy, and require water cooling. This is due to the inefficient, multi-stage nature of Ti:sapphire lasers, which require diode pumping of a solid-state laser, followed by frequency doubling, and finally by pumping the Ti:sapphire crystal with the frequency doubled light. A significant savings in size and weight can be obtained by employing compact USPL sources such as rare-earth doped fiber lasers or solid-state lasers which allow direct diode pumping. Such systems do not require water cooling, possess much greater wall plug efficiency, and are much smaller and lighter than Ti:sapphire lasers. Yb:fiber lasers, operating near a wavelength of 1060 nm, are particularly attractive as an economical, and compact source of short laser pulses. Yb:fiber lasers also have the capability to reach much higher average power levels than Ti:sapphire lasers. Ti:sapphire lasers typically achieve 1-Watt of average power, at best, while modelocked Yb:fiber lasers can generate femtosecond pulses and reach average power levels of several tens of Watts and even more than 100 Watts.

Of particular concern is the generation of terahertz electromagnetic radiation by a pulsed laser in a commercially packaged system. In previous applications such as in a lab environment a laser can be pointed directly through space at an optical switching element with negligible dispersive effects. To allow the commercial use of such a system any solution must be industrially hardened and packaged. A laser pulse propagating in free-space in a room environment may be deflected by objects or people and will suffer degradation from atmospheric effects. This makes free-space optical pulse delivery unacceptably vulnerable to conditions in an industrial environment. A prior art system is known from GB 2352 512.

### BRIEF SUMMARY OF THE INVENTION

In overcoming the drawbacks of the prior art, a system to control the duration of pulses delivered through an optical fiber is described herein. The system includes an optical fiber configured to transmit an optical pulse. A compensator is optically coupled to the optical fiber and is configured to compensate for a dispersion of the optical pulse caused as the optical pulse propagates through the optical fiber. Optically coupled to the compensator is an optically induced terahertz device, whereby the optically induced terahertz device is configured to transmit or receive terahertz radiation. Generally, the compensator will either be a photonic crystal fiber or a grating. If a grating is utilized, the grating is generally a volume Bragg grating or a chirped Bragg grating.

Further objects, features and advantages of the invention will become apparent from a consideration of the following description and the appended claims when taken in connection with the accompanying drawings.

### BRIEF DESCRIPTION OF THE DRAWINGS

Figure 1 is a diagrammatic view of a terahertz system using a photonic crystal fiber for dispersion compensation;

Figure 2A is a diagram of various sample/detector configurations for terahertz measurements, whereby the detector is positioned at various angles to receive terahertz radiation which is transmitted, reflected, refracted, or scattered from the sample;

Figure 2B illustrates a terahertz system combining transmitter and receiver in one housing;

Figures 3A and 3B illustrate a terahertz system employing fiber splitters for optical power distribution to multiple transmitter heads and multiple receiver heads;

Figures 4A and 4B illustrate a fiber delivery system for terahertz transceivers with a chirped volume Bragg grating as dispersion post compensator; and

Figure 5 illustrates a photonic crystal fiber delivery of pulses into the terahertz module and the focusing geometry which relays pulses from the photonic crystal fiber.

### DETAILED DESCRIPTION OF THE INVENTION

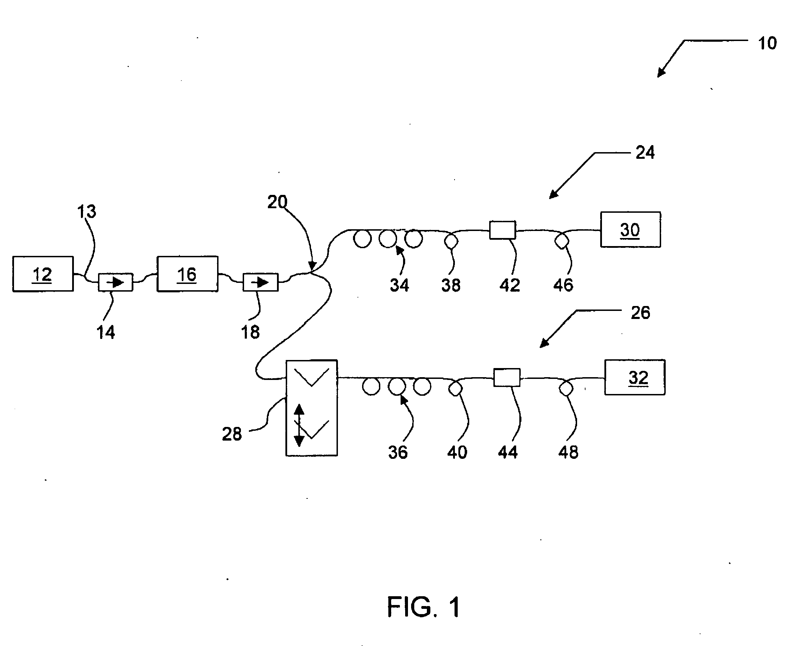

Referring to Figure 1, a diagrammatic view of a terahertz electromagnetic radiation emission and detection system 10 is shown. The system includes an optical source 12 comprising an ytterbium mode-locked fiber oscillator producing sub-200 femtosecond pulses at 1060 nm with a repetition rate 50-100MHz is coupled to a first isolator 14. Although a fiber laser oscillator is the preferred optical source 12, other short pulse sources may be used such as: a mode-locked Er-doped fiber laser; a colliding-pulse mode-locked ("CPM") laser; a Ti:sapphire laser, an amplified Ti:sapphire laser consisting of a seed pulse that is amplified to higher energies; a mode-locked Nd-doped glass laser; a modelocked laser based on any of the chromium doped hosts: LiCaF, LiSrAIF, or LiSrGaAIF, or any laser source producing femtosecond output pulses at megahertz repetition rates but is not limited to such. Additionally, although the repetition rate of 50-100 MHz is optimal for terahertz measurements for various reasons, the repetition rate of the optical source 12 is not critical, and could range anywhere from a few hertz up to several GHz. The optical source 12 is coupled to a fiber 13, which is coupled to a first isolator 14. The coupling method may be butt-coupling, fiber splicing, GRIN lens coupling, aspheric lens coupling or any other low-loss coupling method.

The first isolator 14 is coupled to a fiber amplifier 16. The preferred fiber amplifier 16 is a single stage ytterbium amplifier with more than 20dB gain, but any amplifier that operates at the wavelength of the optical source 12 may be used. The amplifier 16 is coupled to a second isolator 18, which is coupled to fiber splitter 20. The fiber splitter 20 splits the optical signal between a transmitter arm 24, which includes a transmitter 30, and a receiver arm 26, which includes a receiver 32. In the preferred embodiment the fiber splitter 20 directs >50% of the power to the transmitter arm 24 with a minimum of tens of milliwatts directed to a receiver arm 26, such that 0.5 to 5mW of power is emitted from the receiver arm 26 after all of the optical component losses are incurred.

The receiver arm 26 includes an optical delay system 28, which changes the timing between the pulses reaching the receiver 32 and transmitter 30, allowing the time domain waveform reaching the receiver 30 through any intervening objects between the receiver 30 and transmitter 32 to be characterized. Alternatively, the optical delay system 28 can also be placed into the transmitter arm 24.

The transmitter arm 24 and the receiver arm 26, each include a polarization controller 34, 36, respectively. A description of the polarization controllers 34, 36 can be found in U.S. Pat. No. 4,389,090, which is herein incorporated by reference in its entirety. The transmitter arm 24 and the receiver arm 26 each additionally include standard single mode fibers 38, 40 of a standard or a polarizing maintaining type, optically coupled to the polarization controllers 34, 36, respectively. Alternatively, the single mode fibers 38, 40 may be a large-mode-area optical fibers.

Coupled to each of the single mode fibers 38, 40 are couplings 42, 44, respectively. Generally, these couplings 42, 44 utilize fiber splicing coupling, but any suitable optical coupling system may be utilized. Optically coupled to the couplings 42, 44 are compensators 46, 48, respectively. From there, the compensators 46, 48 are optically coupled to the transmitter 30 and receiver 32, respectively, via either a lens or direct contact methodology.

In the preferred embodiment, compensators 46, 48 are hollow core photonic crystal fibers ("PCF fiber"), which add dispersion of a sign opposite to the dispersion acquired in the standard fibers. Alternatively, the compensators 46, 48 could be a free space element, such as a grating. This grating may be a volume Bragg grating or a chirped fiber Bragg grating. A volume Bragg grating is particularly attractive as it affords simple alignment, with high power handling capability, and can be fabricated to compensate several tens of meters of SMF, in practical lengths on the order of several cm. Volume Bragg gratings are typically used in reflective geometry, although in principle they could be designed and built to be used in transmission as well. For simplicity of alignment, the transmission geometry is preferable. The compensators 46, 48 may also be a fixed compensator in conjunction with an adjustable compensator. The fixed compensator may be a PCF fiber, a volume Bragg grating or a chirped Bragg grating.

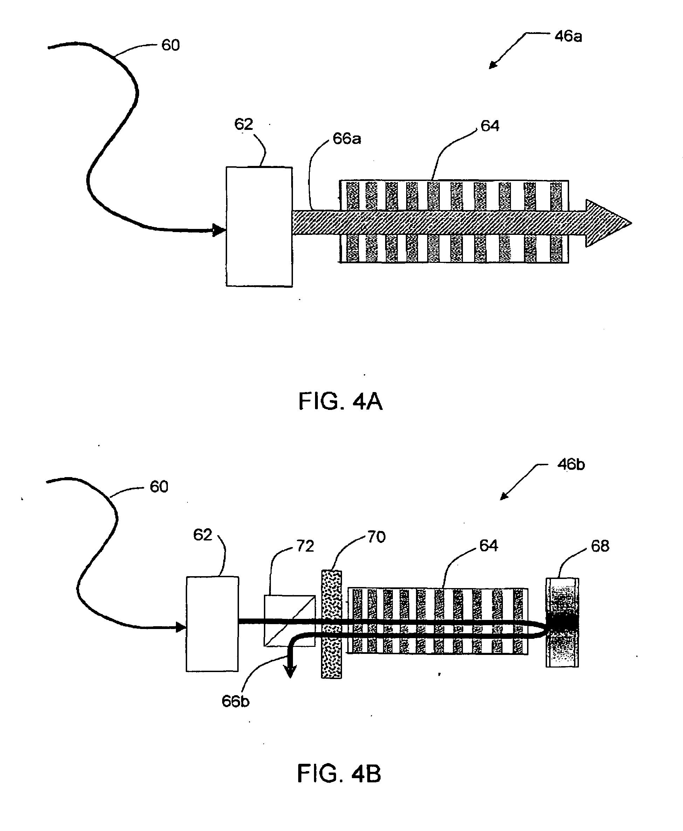

Referring to Figures 4A and 4B, examples of postcompensators 46a and 46b, using both transmissive and reflective geometries, respectively, are shown. The postcompensator 46a includes a lens 62 and a grating 64. Preferably, the grating 66 is a chirped Bragg volume grating. The lens 62 functions to optically couple a PCF fiber 60 to the grating 64. Optical signals 66a emitted by the PCF fiber 60 are then provided to the grating 64.

Figure 4B illustrates the postcompensator 46b using a reflective geometry. Similar as described above, the lens 62 functions to optically couple the optical fiber 60 to the grating 64. However, Figure 4B differs from that of Figure 4A in that a retroreflector 68 reflects the optical signals 66b back through the grating 64 to a quarter waveplate 70 and finally to a beam splitter 72.

Additionally, alternative sequencing of the dispersion compensating elements relative to the delivery fibers could be employed. For example, referring back to Figure 1, the compensators 46, 48 could also be placed before the standard single mode fibers 38, 40 or a single compensator could be placed before the splitter 20 or the optical amplifier 16. To add design flexibility and dispersion adjustability, dispersion compensation could be accomplished using a plurality of dispersion compensating elements interspersed between sections of the delivery fiber, whether the delivery fiber sections be standard single mode fiber or polarization maintaining fiber. Some applications may require that the transmitter arm 26 and receiver arm 24 have different lengths of delivery fiber. In this case, the lengths of PCF fibers or other dispersion compensation elements would be independently fabricated or adjusted to properly compensate the delivery fiber dispersion in their respective arms.

The preferred wavelength of the optical source 12 is sub-100 femtosecond optical pulses are 600-1100 nanometers. At these wavelengths the single mode optical fiber of choice has positive GVD. The exact compensation characteristics of hollow core fiber may be configured to match and cancel the dispersive characteristics of multiple fiber lengths and materials. For example, at 1060nm the hollow core fiber HC-1060-2 from Crystal Fiber Inc. has a dispersion of -120 ps/nm/km while HI-1060 standard fiber from Corning has dispersion of approximately +45 ps/nm/km. Thus, the hollow-core fiber can compensate the HI-1060 fiber when the length ratio is 1:2.7.

As an optical pulse exits the compensator 46, the optical pulse strikes the terahertz transmitter 30, which emits a single-cycle or half-cycle of electromagnetic radiation. The preferred embodiment employs a photoconductive element as the terahertz transmitter 30, generating electron-hole pairs and an impulse electrical current. The photoconductive element may be a pn-junction diode, pin photodiode, metal-semiconductor-metal photodiode, point-contact photodiode, heterojunction photodiode, or a simple semiconductor, which can be fabricated with any semiconductor element comprised of low temperature grown GaAs ("LT-GaAs"), Semi-insulating-GaAs, Silicon (crystalline or ion-implanted) on Sapphire SOS, InP, InGaAs, or any other photoactive element but is not limited to such. Small bandgap semiconductors such as InGaAs or InAs provide the possibility for activation by longer wavelength laser pulses (near 1060 nm). Photoconductive antenna elements formed from LT-InGaAs can be used either for as the terahertz transmitter 30 or for the terahertz receiver 32, and can be activated by short laser pulses not only at 800 nm, but also at or near 1060 nm.

Another method is the use of a second harmonic generating crystal in front of the photoconductive element of the terahertz transmitter 30, such that the photoconductive element is driven at half the wavelength of the laser and optical delivery system. This allows the use of longer wavelength laser sources such as Yb:fiber at 1060 nm, or Er:fiber at 1560 nm - with a larger number of conventional photoconductive antenna materials. Second harmonic generation can be achieved using crystals such as, but not limited to KDP, KTP, BBO, LBO. For more efficient conversion of low optical power pulses, it can be advantageous to use quasi-phase-matched crystals such as periodically poled Lithium Niobate ("PPLN"), or other periodically-poled materials.

The photoconductive element used to generate a terahertz pulse can also be of the kind outlined in U.S. Pat. No. 5,420,595. The physics governing this latter style of device concerns both photoconductive and non-linear optical physics and is covered in the article by B. I. Greene, et al, "Far-Infrared Light Generation at Semiconductor Surfaces and Its Spectroscopic Applications," IEEE J. Quantum Electron., vol. 28, pp. 2302-2312, 1992. This latter-style terahertz transmitter can work with either an externally applied electric field or an induced surface field due to the semiconductor-air interface. This style of internal field can also be due to a semiconductor-semiconductor or metal-semiconductor boundary. This induced field is perpendicular to the surface of the material, so that in order for any terahertz radiation to be radiated into free space, the incident optical pulse must strike the material at a non-zero incidence angle.

The optical pulse striking the photoconductive element will generate a current pulse. The variation in current will generate electromagnetic radiation. The temporal shape of the electromagnetic radiation is determined both by the shortness of the input optical pulse and the metal antenna structure that is coupled to the photoconductive element. In the preferred embodiment the antenna is a dipole or a bowtie configuration. The antenna configuration for this preferred embodiment is outlined in U.S. Pat. No. 5,729,017. The radiation in the preferred mode will be from 50 gigahertz to 5 terahertz, but any electromagnetic frequency above or below this preferred range is possible.

As the optical pulse exits the compensator 48, it will strike a terahertz receiver 32, which will detect incident electromagnetic radiation. The preferred embodiment employs a photoconductive element as the terahertz receiver 32, transiently generating electron-hole pairs which increase the conductivity of the antenna, with a resulting electrical current impulse if there is any incident electromagnetic field. The previous discussion for photoconductive antenna materials for the terahertz transmitter 30 holds for the terahertz receiver 32 as well.

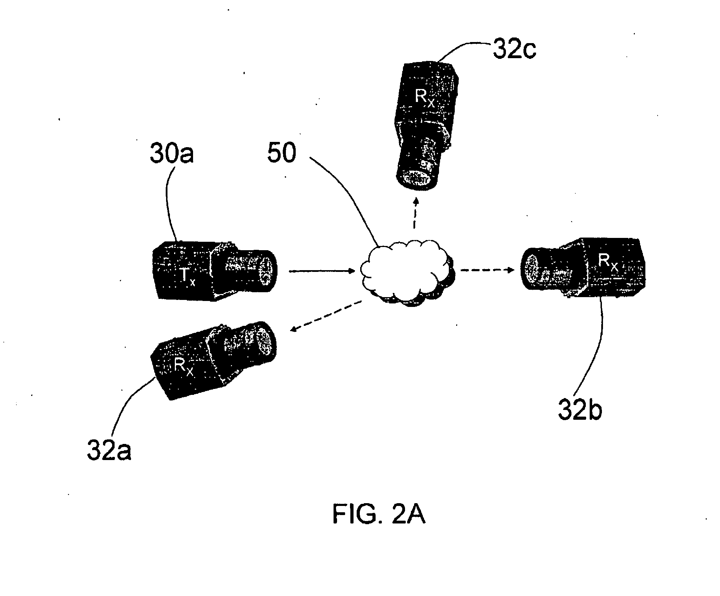

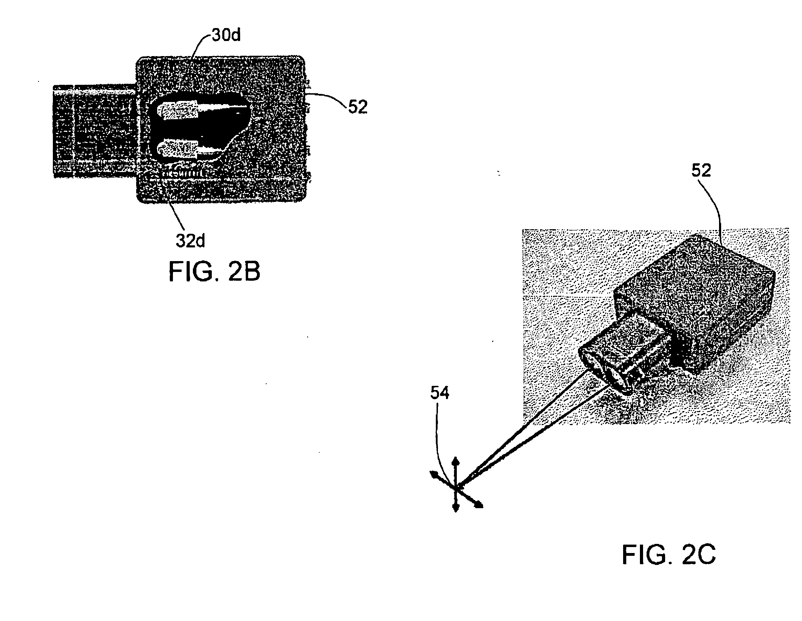

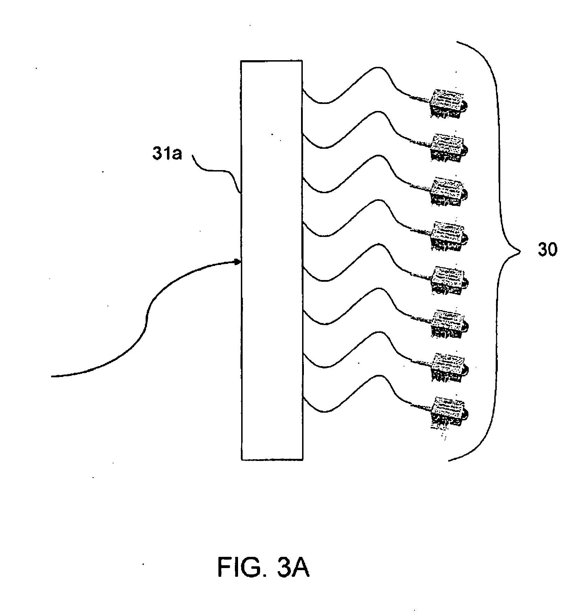

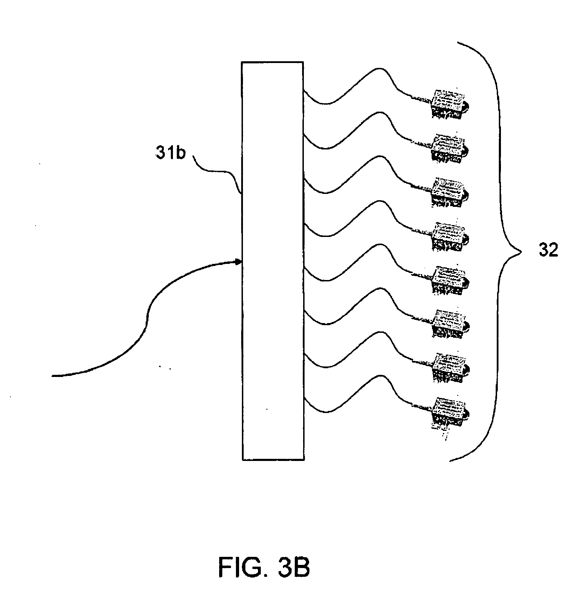

The receiver 32 can be placed at any position surrounding a sample, so as to detect transmitted, reflected, refracted or scattered radiation. For example, as shown in Figure 2A, a single transmitter 30a transmits terahertz radiation to an object 50. Receivers 32a, 32b, 32c, receive terahertz radiation that is reflected, scattered or transmitted, respectively, as the terahertz radiation passes through the object. Referring to Figures 2B and 2C, a transmitter 30d and a receiver 32d are housed within a common housing 52. Terahertz radiation generated by the transmitter 30d will be focused on an object 54 such that terahertz radiation will be reflected back to the receiver 32d. Additionally, as shown in Figures 3A and 3B, it should be understood that the transmitter 30 and/or receiver 32 may contain a plurality of transmitters and/or receivers, respectively. The plurality of transmitters 30 and receivers 32 receive signals via splitters 31 a, 32b, respectively.

Referring back to Figure 1, the fiber delivery system would exactly or at least closely reproduce the original optical pulse from the optical source 12 to the transmitter 30 and receiver 32. However, faster rise times of the optical pulse striking the photoconductive element will lead to broader frequency response. An alternative embodiment would be designed to control both the dispersion and the self phase modulation in the delivery system to compress and shape the pulse for optimal electromagnetic generation and detection.

In the preferred embodiment, the polarization sensitivity of the photoconductive elements of the transmitter 30 and receiver 32 will be addressed by use of a polarization control elements 34 and 36, respectively. There are several alternative methods. A modified antenna design to reduce polarization sensitivity may be used. Also, the antenna response may saturate at high optical powers such that polarization sensitivity is reduced. A partially polarizing element between the fiber output and the photoconducting antenna, oriented in such a way to counteract the partial polarization sensitivity of the antenna, may be used. Finally, the polarization control elements 34, 36, or the optical power delivered through fiber may be actively controlled using feedback from the polarization state at the delivery fiber output or the antenna photocurrent. The high birefringence of PCF fiber must also be considered, insofar as polarization-dependent propagation delay is concerned. The best means of reducing this effect would be to propagate randomly (possibly circularly) polarized light in the PCF fiber, thereby reducing the pulse-broadening effect of its birefringence. Alternatively, it should be possible to pre-determine the fast- and slow- axes of the PCF fiber, and to align and attach it appropriately to the delivery fiber so that the optical pulse is preferentially launched along the desired axis.

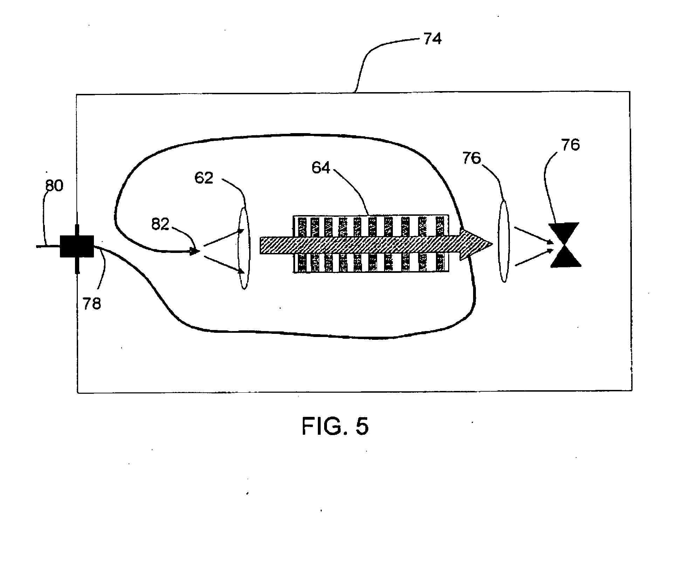

Referring to Figure 5, the PCF fiber 60 would serve as the fiber pigtail for the terahertz transmitter 30 or receiver 32. An extension of the above-described PCF-based embodiment would have the PCF fiber 60 coiled and stored in stationary fashion within an enclosure 74 that also contains an antenna 76 of a terahertz receiver or transmitter, into which the PCF fiber 60 is mounted. An input distal end 78 of the PCF fiber 60 would receive the laser signal via an optical fiber 80, which is either a single mode or polarization maintaining fiber. An output end 82 of the PCF fiber 60, that enters the terahertz module, is mounted similarly to that described in U.S. Patent 6,816,647. Here, the output end 82 of the PCF fiber 60 is optically coupled to the grating 64 via the lens 62. Optical signals 66a travel trough the grating 64 to a second lens 84. The second lens 84 optically couples the optical signals 66a to the antenna 76. Again, this can serve equally well as the terahertz transmitter or terahertz receiver.

Certain materials and objects can be characterized by a frequency-dependent absorption, dispersion, and/or reflection of terahertz transients which pass through, or reflect off, a sample, as outlined in U.S. Pat. No. 5,710,430. The receiver 32 of Figure 1 is configured to detect electromagnetic radiation in the terahertz range, after being conditioned by a sample. The receiver 32 will then generate an electrical signal, which is interpreted, scaled, and/or digitized by any known data acquisition system. The receiver 32 is synchronized to the transmitter 30 by the optical delay system 28. Also part of this invention is the inclusion of this technique in a single-element transceiver that contains both the generator and receiver in one module.

The use of fiber-optic systems allows for convenient optical power distribution to a plurality of transmitters and receivers. This can be effected by employing additional optical fiber couplers/splitters as shown in Figures 3A and 3B. In such a system, careful control of the fiber lengths is required in order to minimize the timing skew between the various terahertz channels and also to insure the optical pulses delivered to each transceiver are as short as possible. In this way, we can avoid having to use independent dispersion control for each of the terahertz channels.

As a person skilled in the art will readily appreciate, the above description is meant as an illustration of implementation of the principles this invention. This description is not intended to limit the scope or application of this invention in that the invention is susceptible to modification, variation and change, without departing from scope of this invention, as defined in the following claims.

## Claims

1. A system for dispersion compensation in a terahertz system, the system comprising:
an optical fiber configured to transmit an optical pulse;
a compensator optically coupled to the optical fiber, the compensator configured to compensate for a dispersion of the optical pulse caused as the optical pulse propagates through the optical fiber;
an optically induced terahertz device having an antenna, the optically induced terahertz device optically coupled to the compensator, whereby the terahertz device is configured to transmit or receive terahertz radiation via the antenna;
wherein the optically induced terahertz device is a terahertz receiver, wherein the antenna is optically coupled to the compensator for the sampling of the electric field formed at the antenna from the received terahertz radiation;
wherein the compensator is a photonic crystal fiber, the photonic crystal fiber being a fixed compensator; and the compensator further comprises
an adjustable compensator in conjunction with the fixed compensator.

2. The system of claim 1, wherein the optical fiber is a single mode optical fiber of a standard or polarizing maintaining type.

3. The system of claim 1, wherein the optical fiber is a large-mode-area optical fiber.

4. The system of claim 1, wherein the terahertz receiver further comprising an optical switching means, wherein the optical switching means is a photoconductive element.

5. The system of claim 1, wherein the antenna is a dipole or bowtie antenna.

6. The system of claim 1, wherein the terahertz receiver is optically coupled to the compensator via a lens.

7. The system of claim 1, wherein the terahertz receiver is optically coupled to the compensator via direct contact.

8. The system of claim 1, further comprising an ytterbium doped or neodymium doped mode-locked laser optically coupled to the optical fiber, the ytterbium doped or neodymium doped mode-locked laser configured to produce the optical pulse.

9. The system of claim 1, wherein the optically induced terahertz device is also a terahertz transmitter, wherein the antenna is optically coupled to the compensator for the generation of terahertz radiation.

10. The system of claim 9, wherein the optical fiber is a single mode optical fiber of a standard or polarizing maintaining type.

11. The system of claim 9, wherein the optical fiber is a large-mode-area optical fiber.

12. The system of claim 9, wherein the terahertz transmitter further comprising an optical switching means, wherein the optical switching means is a photoconductive element.

13. The system of claim 9, wherein the antenna is a dipole or bowtie antenna.

14. The system of claim 9, wherein the terahertz transmitter is optically coupled to the compensator via a lens.

15. The system of claim 9, wherein the terahertz transmitter is optically coupled to the compensator via direct contact.

16. The system of claim 9, further comprising an ytterbium doped or neodymium doped mode-locked laser optically coupled to the optical fiber, the ytterbium doped or neodymium doped mode-locked laser configured to produce the optical pulse.

## Patentansprüche

1. System zur Dispersionskompensation in einem Terahertzsystem, wobei das System Folgendes umfasst:
eine optische Faser, die dafür ausgelegt ist, einen optischen Impuls zu übertragen;
einen optisch mit der optischen Faser gekoppelten Kompensator, wobei der Kompensator dafür ausgelegt ist, eine Dispersion des optischen Impulses, die verursacht wird, während sich der optische Impuls durch die optische Faser ausbreitet, zu kompensieren;
eine optisch induzierte Terahertzeinrichtung mit einer Antenne, wobei die optisch induzierte Terahertzeinrichtung optisch mit dem Kompensator gekoppelt ist, wobei die Terahertzeinrichtung dafür ausgelegt ist, über die Antenne Terahertzstrahlung zu senden oder zu empfangen;
wobei die optisch induzierte Terahertzeinrichtung ein Terahertzempfänger ist, wobei die Antenne optisch mit dem Kompensator gekoppelt ist, um das an der Antenne gebildete elektrische Feld aus der empfangenen Terahertzstrahlung abzutasten;
wobei der Kompensator eine Faser photonischen Kristalls ist, wobei die Faser photonischen Kristalls ein Festkompensator ist; und
der Kompensator ferner einen einstellbaren Kompensator in Verbindung mit dem Festkompensator umfasst.

2. System nach Anspruch 1, wobei die optische Faser eine optische Einmodenfaser eines standard- oder polarisationserhaltenden Typs ist.

3. System nach Anspruch 1, wobei die optische Faser eine optische Large-Mode-Area-Faser ist.

4. System nach Anspruch 1, wobei der Terahertzempfänger ferner ein optisches Schaltmittel umfasst, wobei das optische Schaltmittel ein photoleitfähiges Element ist.

5. System nach Anspruch 1, wobei die Antenne eine Dipol- oder Schmetterlingsantenne ist.

6. System nach Anspruch 1, wobei der Terahertzempfänger über eine Linse optisch mit dem Kompensator gekoppelt ist.

7. System nach Anspruch 1, wobei der Terahertzempfänger über direkten Kontakt optisch mit dem Kompensator gekoppelt ist.

8. System nach Anspruch 1, das ferner einen optisch mit der optischen Faser gekoppelten ytterbiumdotierten oder neodymdotierten modenverriegelten Laser umfasst, wobei der ytterbiumdotierte oder neodymdotierte modenverriegelte Laser dafür ausgelegt ist, den optischen Impuls zu erzeugen.

9. System nach Anspruch 1, wobei die optisch induzierte Terahertzeinrichtung auch ein Terahertzsender ist, wobei die Antenne zur Erzeugung von Terahertzstrahlung optisch mit dem Kompensator gekoppelt ist.

10. System nach Anspruch 9, wobei die optische Faser eine optische Einmodenfaser eines standard- oder polarisationserhaltenden Typs ist.

11. System nach Anspruch 9, wobei die optische Faser eine optische Large-Mode-Area-Faser ist.

12. System nach Anspruch 9, wobei der Terahertzempfänger ferner ein optisches Schaltmittel umfasst, wobei das optische Schaltmittel ein photoleitfähiges Element ist.

13. System nach Anspruch 9, wobei die Antenne eine Dipol- oder Schmetterlingsantenne ist.

14. System nach Anspruch 9, wobei der Terahertzempfänger über eine Linse optisch mit dem Kompensator gekoppelt ist.

15. System nach Anspruch 9, wobei der Terahertzempfänger über direkten Kontakt optisch mit dem Kompensator gekoppelt ist.

16. System nach Anspruch 9, das ferner einen optisch mit der optischen Faser gekoppelten ytterbiumdotierten oder neodymdotierten modenverriegelten Laser umfasst, wobei der ytterbiumdotierte oder neodymdotierte modenverriegelte Laser dafür ausgelegt ist, den optischen Impuls zu erzeugen.

## Revendications

1. Système de compensation de dispersion dans un système térahertz, le système comprenant :
une fibre optique configurée pour transmettre une impulsion optique ;
un compensateur couplé optiquement à la fibre optique, le compensateur étant configuré pour compenser une dispersion de l'impulsion optique induite lorsque l'impulsion optique se propage dans la fibre optique ;
un dispositif térahertz induit optiquement comportant une antenne, le dispositif térahertz induit optiquement étant couplé optiquement au compensateur, moyennant quoi le dispositif térahertz est configuré pour transmettre ou recevoir un rayonnement térahertz via l' antenne ;
dans lequel le dispositif térahertz induit optiquement est un récepteur térahertz, dans lequel l'antenne est couplée optiquement au compensateur pour l'échantillonnage du champ électrique formé au niveau de l'antenne à partir du rayonnement térahertz reçu ;
dans lequel le compensateur est une fibre de cristal photonique, la fibre de cristal photonique étant un compensateur fixe ; et le compensateur comprend en outre
un compensateur ajustable conjointement avec le compensateur fixe.

2. Système selon la revendication 1, dans lequel la fibre optique est une fibre optique monomode d'un type de maintien standard ou polarisant.

3. Système selon la revendication 1, dans lequel la fibre optique est une fibre optique à grande étendue de mode.

4. Système selon la revendication 1, dans lequel le récepteur térahertz comprend en outre un moyen de commutation optique, dans lequel le moyen de commutation optique est un élément photoconducteur.

5. Système selon la revendication 1, dans lequel l'antenne est un dipôle ou une antenne en noeud de papillon.

6. Système selon la revendication 1, dans lequel le récepteur térahertz est couplé optiquement au compensateur via une lentille.

7. Système selon la revendication 1, dans lequel le récepteur térahertz est couplé optiquement au compensateur via un contact direct.

8. Système selon la revendication 1, comprenant en outre un laser à mode verrouillé dopé à l'ytterbium ou dopé au néodyme couplé optiquement à la fibre optique, le laser à mode verrouillé dopé à l'ytterbium ou dopé au néodyme étant configuré pour produire l'impulsion optique.

9. Système selon la revendication 1, dans lequel le dispositif térahertz induit optiquement est également un émetteur térahertz, dans lequel l'antenne est couplée optiquement au compensateur en vue de générer un rayonnement térahertz.

10. Système selon la revendication 9, dans lequel la fibre optique est une fibre optique monomode d'un type de maintien standard ou polarisant.

11. Système selon la revendication 9, dans lequel la fibre optique est une fibre optique à grande étendue de mode.

12. Système selon la revendication 9, dans lequel l'émetteur térahertz comprend en outre un moyen de commutation optique, dans lequel le moyen de commutation optique est un élément photoconducteur.

13. Système selon la revendication 9, dans lequel l'antenne est un dipôle ou une antenne en noeud de papillon.

14. Système selon la revendication 9, dans lequel l'émetteur térahertz est couplé optiquement au compensateur via une lentille.

15. Système selon la revendication 9, dans lequel l'émetteur térahertz est couplé optiquement au compensateur via un contact direct.

16. Système selon la revendication 9, comprenant en outre un laser à mode verrouillé dopé à l'ytterbium ou dopé au néodyme couplé optiquement à la fibre optique, le laser à mode verrouillé dopé à l'ytterbium ou dopé au néodyme étant configuré pour produire l'impulsion optique.
